(19) Europäisches Patentamt
European Patent Office
Office européen des brevets

(11) **EP 4 439 703 A1**

(12) **EUROPEAN PATENT APPLICATION**

(43) Date of publication:
**02.10.2024 Bulletin 2024/40**

(21) Application number: **23208996.1**

(22) Date of filing: **10.11.2023**

(51) International Patent Classification (IPC):
**H01M 4/134** (2010.01)    **H01M 4/133** (2010.01)
**H01M 4/1393** (2010.01)    **H01M 4/1395** (2010.01)
**H01M 4/36** (2006.01)    **H01M 4/38** (2006.01)
**H01M 4/587** (2010.01)

(52) Cooperative Patent Classification (CPC):
**H01M 4/386; H01M 4/133; H01M 4/134;
H01M 4/1393; H01M 4/1395; H01M 4/366;
H01M 4/587;** H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2023 CN 202310340247**

(71) Applicant: **AESC Japan Ltd.
Zama-shi, Kanagawa 252-0012 (JP)**

(72) Inventors:
• **HUANG, Peng**
  **Pudong New Area Shanghai, 201315 (CN)**
• **LI, Ruonan**
  **Pudong New Area Shanghai, 201315 (CN)**
• **SUN, Zhonggui**
  **Pudong New Area Shanghai, 201315 (CN)**
• **SUN, Huayu**
  **Pudong New Area Shanghai, 201315 (CN)**

(74) Representative: **Becker, Eberhard
Becker Kurig & Partner
Patentanwälte mbB
Bavariastraße 7
80336 München (DE)**

(54) **SILICON-CARBON COMPOSITE MATERIAL, PREPARATION METHOD THEREOF, ELECTROCHEMICAL DEVICE AND ELECTRONIC APPARATUS**

(57) A silicon-carbon composite material, a preparation method thereof, an electrochemical device, and an electronic apparatus are provided. The silicon-carbon composite material includes a carbon substrate, a silicon material attached to a surface of the carbon substrate and/or an inner portion of the carbon substrate, and a nonmetal element doped on the carbon substrate. Covalent bond energy formed by the nonmetal element and a carbon element in is $180\text{ eV} \leqq E_1 \leqq 700\text{ eV}$ or $130\text{ eV} \leqq E_2 \leqq 210\text{ eV}$.

**Description**

**BACKGROUND**

Technical Field

The disclosure relates to the technical field of secondary batteries, and in particular, relates to a silicon-carbon composite material and a preparation method thereof, an electrochemical device, and an electronic apparatus.

Description of Related Art

At present, the commercialization of lithium battery negative electrodes is mainly based on artificial/natural graphite, but it is close to its theoretical specific capacity limit (372 mAh/g). The theoretical specific capacity of silicon is as high as 4200mAh/g, which is more than 10 times that of the currently-available graphite-based negative electrode materials, so the hidden danger of lithium plating may not occur. Silicon is safer than graphite anode materials, and moreover, silicon is abundant in reserves and low in costs, so it is the most promising negative electrode material for next-generation lithium batteries. However, silicon materials react with lithium alloys during charging and discharging, so there is a serious volume effect (expansion rate can reach 300%). The expansion effect will lead to the repeated rupture and formation of the SEI film on the surface of the negative electrode, which will eventually lead to poor cycle performance and coulombic efficiency, so silicon materials need to be modified before they can be applied. The modification of silicon negative electrode materials mainly includes nanonization, carbon coating, and other technical contents to form silicon-carbon composite materials to improve cycle performance. Silicon nanonization is conducive to stress release. When the particle size is smaller than 150nm, the volume effect is weakened, and the nano-silicon will expand during the charging and discharging process but may not be easily broken, so the cycle performance is improved. Nano-silicon mainly includes nanoparticles, nanowires, and nanosheets, so nano-silicon may be used to improve the structural stability of the material, buffer the volume expansion of the material, and increase the active interface of the material. Carbon coating may be used to improve the conductivity of silicon particles, improve the rate performance, and prevent the agglomeration of nano-silicon. The complete carbon coating may lower the direct contact between the silicon material and the electrolyte, inhibit the excessive growth of the SEI film, stabilize the interface, and improve the coulombic efficiency.

The preparation process of silicon-carbon composite materials is complicated, and there is no standardized process. The technical difficulty mainly lies in the nanonization of the silicon materials and the preparation process of compounding with carbon materials. At present, the commonly used preparation methods mainly include the chemical vapor deposition method, the mechanical ball milling method, the sol-gel process, and the high-temperature pyrolysis method, among which the former two are suitable for industrial production. The mechanical ball milling method is to use a sand mill tog rind micron silicon powder into a nano silicon slurry, then compound it with graphite, and then dry it to prepare a silicon carbon composite material. However, the grinding time of nano-silicon in this process is long, the energy consumption is high, the agglomeration of nano-silicon particles is serious, and the process route is long. The components of silicon-carbon composite materials prepared by chemical vapor deposition are closely connected and have strong binding force, so the active materials are not easy to fall off during charging and discharging. The cycle stability is good, and agglomeration may not occur easily. However, static deposition is used in the method disclosed by the related art for preparing silicon-carbon composite materials by chemical vapor deposition, so agglomeration of particle materials and uneven coating may occur easily, and the performance of the materials is affected. Further, when chemical vapor deposition is used to prepare silicon materials in the related art, some silicon sources such as dichlorodimethylsilane need to introduce metal catalysts to successfully prepare and adjust the morphology of the silicon materials. However, metal catalysts are difficult to be completely removed by ordinary processes, so that the performance and safety of batteries may be affected.

Besides, although the currently-available silicon-carbon composite materials may improve the poor electrical conductivity and cycle performance of the silicon materials to a certain extent, it is still difficult to meet the growing demand for battery performance in various fields. Therefore, it is still necessary to improve materials from the perspective of material composition and process, so as to better meet the requirements of high-performance lithium-ion batteries for negative electrode materials.

**SUMMARY**

In view of the abovementioned shortcomings found in the related art, the disclosure aims to provide a silicon-carbon composite material, a preparation method thereof, an electrochemical device, and an electronic apparatus, so as to improve the performance of the silicon-carbon composite material through nonmetal doping optimization and solve the problems of insufficient active sites on the carbon substrate and insufficient adsorption capacity of silicon during the vapor deposition process.

To achieve the above and other related purposes, the first aspect of the disclosure provides a silicon-carbon composite material including a carbon substrate, a silicon material attached to a surface of the carbon substrate and/or an inner portion of the carbon substrate, and a nonmetal element doped on the carbon substrate. The nonmetal element and a carbon element form a covalent bond.

The silicon-carbon composite material satisfies the following relationships:

$$E_1 = [910.4\ln(t_1) - 1997.7] \pm 10 \qquad (I), $$

and

$$E_2 = [503.1\ln(t_2) - 1586] \pm 10 \quad (II),$$

$E_1$ ranges from 180 eV to 700 eV, and $E_2$ ranges from 130 eV to 210 eV,
where $E_1$ and $E_2$ are covalent bond energy formed by the nonmetal element and the carbon element in the silicon-carbon composite material, and ti and $t_2$ are relative atomic mass of the nonmetal element.

Further, the nonmetal element is selected from at least one of B, N, F, Cl, S, and P.

Further, the covalent bond formed by the nonmetal element and the carbon element is selected from at least one of a B-C bond, a N-C bond, a F-C bond, a Cl-C bond, a S-C bond, and a P-C bond. A value range of bond energy of the B-C bond is $188 \pm 10$ eV, a value range of bond energy of the N-C bond is $400 \pm 10$ eV, a value range of bond energy of the F-C bond is $685 \pm 10$ eV, a value range of bond energy of the Cl-C bond is $200 \pm 10$ eV, a value range of bond energy of the S-C bond is $168 \pm 10$ eV, and a value range of bond energy of the P-C bond is $134 \pm 10$ eV.

Further, in the silicon-carbon composite material, a percentage by mass of the nonmetal element ranges from 0.001 wt% to 5wt%, preferably from 0.001 wt% to 2 wt%.

Further, in the silicon-carbon composite material, a percentage by mass of a silicon element ranges from 10 wt% to 65 wt%, preferably from 20 wt% to 65 wt%.

Further, in the silicon-carbon composite material, a percentage by mass of the carbon element ranges from 35 wt% to 90 wt%, preferably from 40 wt% to 80 wt%.

Further, an ID/IG ratio of the silicon-carbon composite material ranges from 0.4 to 2, preferably from 0.4 to 1.

Further, the silicon-carbon composite material satisfies the following relationship:

$$R = [m \times P / 2.21] / [1 - m \times n / 2.25] \times 100\%,$$

R ranges from 20% to 70%,
where R is an accessible porosity and m is a true density with a unit of $g/cm^3$ in the silicon-carbon composite material, n and P respectively are the percentages by mass of the carbon element and the silicon element in the carbon-coated silicon-carbon composite material with a unit of wt%.

Further, the accessible porosity (R) of the silicon-carbon composite material ranges from 30% to 60%.

Further, the silicon-carbon composite material includes an inner core and a carbon coating layer covering the inner core, the inner core includes the carbon substrate, the silicon material attached to the surface of the carbon substrate and/or the inner portion of the carbon substrate, and the nonmetal element doped on the carbon substrate, and the nonmetal element and the carbon element form the covalent bond.

The second aspect of the disclosure provides a preparation method of silicon-carbon composite material, and the following steps are included.

In a high-temperature heat treatment step: a carbon source, an inorganic nonmetal source, and a pore-forming agent are uniformly mixed, and then a nonmetal-doped carbon-based material is obtained through a high-temperature heat treatment.

In a chemical vapor deposition step, a silicon source is reacted with the nonmetal-doped carbon-based material through a chemical vapor deposition, and the silicon-carbon composite material is obtained.

The silicon-carbon composite material includes a carbon substrate, a silicon material attached to a surface of the carbon substrate and/or an inner portion of the carbon substrate, and a nonmetal element doped on the carbon substrate. The nonmetal element and a carbon element form a covalent bond.

The silicon-carbon composite material satisfies the following relationships:

$$E_1=[910.4\ln(t_1)-1997.7]\pm10 \qquad (I),$$

and

$$E_2=[503.1\ln(t_2)-1586]\pm10 \quad (II),$$

$E_1$ ranges from 180 eV to 700 eV, and $E_2$ ranges from 130 eV to 210 eV,
where $E_1$ and $E_2$ are covalent bond energy formed by the nonmetal element and the carbon element in the silicon-carbon composite material, and $t_i$ and $t_2$ are relative atomic mass of the nonmetal element.

Further, the carbon source is selected from at least one of glucose, sucrose, maltose, chitosan, and soluble starch.

Further, the inorganic nonmetal source is selected from at least one of a boron source, a nitrogen source, a fluorine source, a chlorine source, a sulfur source, and a phosphorus source.

Further, the silicon source is selected from at least one of monosilane ($SiH_4$), disilane ($H_6Si_2$), dimethyldichlorosilane, trichloromethylsilane, tetramethylsilane, trichlorosilane, tetrachlorosilane, methyl silicate, and ethyl silicate.

Further, the preparation method of the silicon-carbon composite material further includes the following step. Carbon-coating is performed on the silicon-carbon composite material.

Further, a time of the chemical vapor deposition is 1 hour to 12 hours, preferably 2 hours to 12 hours, more preferably 3 hours to 12 hours.

Further, a mass ratio of the carbon source and the inorganic nonmetal source is (80 to 99):(1 to 40), preferably (80 to 90):(10 to 20).

The third aspect of the disclosure provides an electrochemical device including a negative electrode sheet. The negative electrode sheet includes a negative electrode current collector and a negative electrode active material layer disposed on the negative electrode current collector. The negative electrode active material layer includes a negative electrode active material. The negative electrode active material includes the silicon-carbon composite material according to the first aspect and/or the silicon-carbon composite material obtained through the method according to the second aspect.

The fourth aspect of the disclosure provides an electronic apparatus including the electrochemical device according to the third aspect of the disclosure.

As described above, the silicon-carbon composite material, the preparation method thereof, the electrochemical device, and the electronic apparatus exhibit the following beneficial effects.

1. In the disclosure, in view of the lack of active sites on the carbon substrate and the insufficient adsorption capacity of silicon during the vapor deposition process, through the in-situ doping of nonmetal element, the active sites of the carbon substrate are increased during the chemical vapor deposition process, and thus the silicon grain growth is catalyzed. Therefore, the optimization of the carbon component in the silicon-carbon composite material is improved, and the performance of the silicon-carbon composite material is enhanced. Further, the introduction of a large number of active sites may function as a catalyst, so the introduction of metal catalysts is avoided, and the safety and performance of the battery are thus ensured. Further, compared to the chemical vapor deposition process without the nonmetal element doping, the presence of active sites may improve the accessible ratio of silicon source in the deposition process and reduce the costs.

2. In the disclosure, the nonmetal element introduced by doping gradually diffuses into the carbon substrate during high-temperature sintering and replaces part of the carbon atoms, so the replacement doping is formed. In this way, the concentration of vacancy carriers in the carbon material is effectively increased, so the intrinsic electronic conductivity of the carbon material is increased, and the effect of powder conduction is further enhanced. While obtaining high powder conductivity, the carbon layer also limits the volume expansion effect of the silicon material, allowing the silicon-based material to take full advantage of its high capacity.

3. In the disclosure, the process of the preparation method of the silicon-carbon composite material is simple, and its operation is easy, and this method is suitable for large-scale and industrial production. The silicon-carbon composite material provided by the disclosure could be used as the negative electrode active material applied in the negative electrode active material layer, made into the negative electrode sheet, and assembled with the positive electrode sheet, the separator, the electrolyte, and other components to form the electrochemical device such as a lithium-ion battery, so the electrical performance is significantly improved.

## DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

An embodiment of the disclosure provides a silicon-carbon composite material including a carbon substrate, a silicon material attached to a surface of the carbon substrate and/or an inner portion of the carbon substrate, and a nonmetal element doped on the carbon substrate. The nonmetal element and a carbon element form a covalent bond.

The silicon-carbon composite material satisfies the following relationships:

$$E_1=[910.4\ln(t_1)-1997.7]\pm10 \qquad (I),$$

and

$$E_2=[503.1\ln(t_2)-1586]\pm10 \quad (II),$$

$E_1$ ranges from 180 eV to 700 eV, and $E_2$ ranges from 130 eV to 210 eV,
where $E_1$ and $E_2$ are covalent bond energy formed by the nonmetal element and the carbon element in the silicon-carbon composite material, and $t_i$ and $t_2$ are relative atomic mass of the nonmetal element.

In some embodiments, the nonmetal element is selected from at least one of B, N, F, Cl, S, and P.

In some embodiments, the covalent bond formed by the nonmetal element and the carbon element is selected from at least one of a B-C bond, a N-C bond, a F-C bond, a Cl-C bond, a S-C bond, and a P-C bond. A value range of bond energy of the B-C bond is $188\pm10$ eV, a value range of bond energy of the N-C bond is $400\pm10$ eV, a value range of bond energy of the F-C bond is $685\pm10$ eV, a value range of bond energy of the Cl-C bond is $200\pm10$ eV, a value range of bond energy of the S-C bond is $168\pm10$ eV, and a value range of bond energy of the P-C bond is $134\pm10$ eV.

In the above embodiments, in view of the lack of active sites on the carbon substrate and the insufficient adsorption capacity of silicon during the vapor deposition process, through the in-situ doping of nonmetal element, the active sites of the carbon substrate are increased during the chemical vapor deposition process, and thus the silicon grain growth is catalyzed. Therefore, the optimization of the carbon component in the silicon-carbon composite material is improved, and the performance of the silicon-carbon composite material is enhanced. Further, the introduction of a large number of active sites may function as a catalyst, so the introduction of metal catalysts is avoided, and the safety and performance of the battery are thus ensured. Further, compared to the chemical vapor deposition process without the nonmetal element doping, the presence of active sites may improve the accessible ratio of silicon source in the deposition process and reduce the costs. In some embodiments, in the silicon-carbon composite material, a percentage by mass of the nonmetal element ranges from 0.001 wt% to 5wt%, preferably from 0.001 wt% to 2 wt%.

In some embodiments, in the silicon-carbon composite material, a percentage by mass of a silicon element ranges from 10 wt% to 65 wt%, preferably from 20 wt% to 65 wt%.

In some embodiments, in the silicon-carbon composite material, a percentage by mass of the carbon element ranges from 35 wt% to 90 wt%, preferably from 40 wt% to 80 wt%.

In some embodiments, an ID/IG ratio of the silicon-carbon composite material ranges from 0.4 to 2, preferably from 0.4 to 1.

In some embodiments, the silicon-carbon composite material satisfies the following relationship:

$$R=[m\times P/2.21]/[1- m\times n/2.25] \times100\%,$$

R ranges from 20% to 70%, preferably from 30% to 60%,
where R is an accessible porosity and m is a true density with a unit of g/cm$^3$ in the silicon-carbon composite material, n and P respectively are the percentages by mass of the carbon element and the silicon element in the carbon-coated silicon-carbon composite material with a unit of wt%.

In some embodiments, the carbon substrate is selected from at least one of artificial graphite, natural graphite, expanded graphite, flake graphite, multilayer graphene, multilayer graphene, hard carbon, soft carbon, mesocarbon microspheres, porous carbon, and hollow carbon microspheres.

In some embodiments, the silicon material is selected from at least one of Si and $SiO_x$, and the silicon material is nanoscale. Preferably, a particle size of the silicon material is 2 nm to 20 nm. The silicon material is rod-shaped and/or granular, including but not limited to spherical, quasi-spherical, or needle-shaped particles. In another embodiment of the disclosure, the silicon-carbon composite material includes an inner core and a carbon coating layer covering the inner core, and the inner core includes the carbon substrate, the silicon material attached to the surface of the carbon substrate and/or the inner portion of the carbon substrate, and the nonmetal element doped on the carbon substrate. The nonmetal element and the carbon element form the covalent bond.

An embodiment of the disclosure provides a preparation method of silicon-carbon composite material, and the following steps are included.

In a high-temperature heat treatment step: a carbon source, an inorganic nonmetal source, and a pore-forming agent are uniformly mixed, and then a nonmetal-doped carbon-based material is obtained through a high-temperature heat treatment.

In a chemical vapor deposition step, a silicon source is reacted with the nonmetal-doped carbon-based material through a chemical vapor deposition, and the silicon-carbon composite material is obtained.

The silicon-carbon composite material includes a carbon substrate, a silicon material attached to a surface of the carbon substrate and/or an inner portion of the carbon substrate, and a nonmetal element doped on the carbon substrate. The nonmetal element and a carbon element form a covalent bond.

The silicon-carbon composite material satisfies the following relationship:

$$E_1=[910.4\ln(t_1)-1997.7]\pm10 \qquad (I)$$

and

$$E_2=[503.1\ln(t_2)-1586]\pm10 \quad (II),$$

$E_1$ ranges from 180 eV to 700 eV, and $E_2$ ranges from 130 eV to 210 eV,

where $E_1$ and $E_2$ are covalent bond energy formed by the nonmetal element and the carbon element in the silicon-carbon composite material, and $t_1$ and $t_2$ are relative atomic mass of the nonmetal element.

In some embodiments, a preparation method of the nonmetal-doped carbon-based material includes the following steps.

The carbon source, the inorganic nonmetal source, and the pore-forming agent are added into a solvent, and the solvent is stirred uniformly and is then removed. The obtained solid is ground into powder, and the carbon source, the inorganic nonmetal source, and the pore-forming agent are uniformly mixed in the obtained powder. The obtained powder is prepared through the high-temperature heat treatment, and the nonmetal-doped carbon-based material is obtained.

In some embodiments, the carbon source, the inorganic non-metal source, and the pore-forming agent are water-soluble compounds, and the solvent is selected from water. The preparation method of the nonmetal-doped carbon-based material includes the following steps.

The carbon source, the inorganic nonmetal source, and the pore-forming agent are added into water and stirred to dissolve completely, and a uniform and stable solution is formed. The solution is reheated and recrystallized, and the obtained solid is ground into powder, so that the carbon source, the inorganic nonmetal source and the pore-forming agent in the obtained powder are uniformly mixed. The obtained powder is subjected to a high-temperature heat treatment. After the high-temperature heat treatment, the product is cooled, ground and sieved, stirred with water until the recrystallized salt is dissolved, and then the product filtered and washed, and finally dried to obtain the nonmetal-doped carbon-based material.

In some embodiments, the heating temperature is 90°C to 110°C, and the heating time is 10 hours to 24 hours.

In some embodiments, the carbon source is selected from at least one of glucose, sucrose, maltose, chitosan, and soluble starch. The inorganic nonmetal source is selected from at least one of a boron source, a nitrogen source, a fluorine source, a chlorine source, a sulfur source, and a phosphorus source. Preferably, the boron source is selected from at least one of titanium boride, boron nitride, boron trichloride, boric acid, diboron trioxide, sodium tetraphenylborate, sodium borohydride, and sodium borate. The nitrogen source is selected from at least one of ammonia water, urea, and ammonium sulfate. The fluorine source is selected from at least one of hydrofluoric acid, sodium fluoride, and potassium fluoride. The chlorine source is selected from at least one of hydrochloric acid, sodium chloride, potassium chloride, and calcium chloride. The sulfur source is selected from at least one of sulfuric acid, sodium sulfide, thiourea, and thioacetamide. The phosphorus source is selected from at least one of sodium dihydrogen phosphate, potassium dihydrogen phosphate, monoammonium phosphate, and ammonium dihydrogen phosphate. The silicon source is selected from at least one of monosilane ($SiH_4$), disilane ($H_6Si_2$), dimethyldichlorosilane, trichloromethylsilane, tetramethylsilane, trichlorosilane, tetrachlorosilane, methyl silicate, and ethyl silicate.

In another embodiment of the disclosure, the preparation method of the silicon-carbon composite material further includes the following step: Carbon-coating is performed on the silicon-carbon composite material.

In some embodiments, during the high-temperature heat treatment, the calcination temperature is 500°C to 1000°C, and the calcination time is 1 hour to 5 hours.

In some embodiments, a time of the chemical vapor deposition is 1 hour to 12 hours, preferably 2 hours to 12 hours, more preferably 3 hours to 12 hours. Prolonged chemical vapor deposition time can increase silicon content.

In some embodiments, a mass ratio of the carbon source and the inorganic nonmetal source is (80 to 99):(1 to 40), preferably (80 to 90):(10 to 20). By changing the ratio of the carbon source and the inorganic nonmetal source, the doping amount of the inorganic nonmetal may be effectively increased, and the increase of the doping amount of the inorganic nonmetal may further improve the deposition efficiency of silicon. Under the same conditions, the silicon content of the composite material increases with the increase of the inorganic nonmetal content in the material, and the ID/IG value of the material increases accordingly. This suggests that the degree of disorder of the carbon material increases, the conductivity increases, and the direct current resistance (DCR) of the battery decreases.

It should be noted that the silicon-carbon composite material described in the above embodiments may be obtained through the method described in the above embodiments, but the disclosure is not limited thereto.

An embodiment of the disclosure provides a negative electrode sheet. The negative electrode sheet includes a negative electrode current collector and a negative electrode active material layer disposed on the negative electrode current collector. The negative electrode active material layer includes a negative electrode active material. The negative electrode active material includes the silicon-carbon composite material according to the above embodiments and/or the silicon-carbon composite material prepared and obtained through the method according to the above embodiments. In some embodiments, in terms of percentage by mass, the negative electrode active material includes 24% to 45% of the silicon-carbon composite material.

An embodiment of the disclosure provides an electrochemical device including the negative electrode sheet as described in the above embodiments and including a positive electrode sheet, a separator, and an electrolyte.

The electrochemical device in the embodiments of the disclosure is any electrochemical device, such as but not limited to a lithium-ion battery or a sodium-ion battery.

The positive electrode sheet includes a positive electrode current collector and a positive electrode active material layer disposed on the positive electrode current collector. The positive electrode active material layer includes a positive electrode active material.

The positive electrode active material may generally be a lithium-containing composite oxide, and specific examples $LiMnO_2$, $LiFeO_2$, $LiMn_2O_4$, $Li_2FeSiO_4$, $LiNi_{1/3}Co_{1/3}Mn_{1/3}O_2$, $LiNi_5CO_2Mn_3O_2$, $Li_zNi_{(1-x-y)}Co_xM_yO_2$ (where $0.01 \leq x \leq 0.20$, $0 \leq y \leq 0.20$, $0.97 \leq z \leq 1.20$, and M represents an element selected from at least one of Mn, V, Mg, Mo, Nb, and Al), $LiFePO_4$, and $Li_zCO_{(1-x)}M_xO_2$ (where $0 \leq x \leq 0.1$, $0.97 \leq z \leq 1.20$, and M represents an element selected from at least one of the group consisting of Mn, Ni, V, Mg, Mo, Nb, and Al).

Substances such as a conductive agent and a binder are usually added to the active material. According to different needs, the addition amount of the substances may be adjusted within 1% to 50% of the total mass of the positive electrode active material and may be adjusted within 55% to 76% of the total mass of the negative electrode active material.

The conductive agent is a reagent used to ensure that the electrode has good charging and discharging performance. The conductive agent may be, for example, a graphite material such as natural graphite and artificial graphite, a carbon black material such as conductive carbon black (Super P), acetylene black, Ketjen black, channel black, furnace black, lamp black, and thermal black, a conductive fiber such as a carbon fiber and a metal fiber, metal powder such as carbon fluoride powder, aluminum powder, and nickel powder, conductive whiskers such as zinc oxide, and potassium titanate, and a conductive metal oxide such as titanium dioxide or a polyphenylene derivative.

The binder is a component that facilitates the bonding between the active material and the conductive agent and facilitates the bonding of the active material and the current collector. The binder may generally be selected from polyvinylidene fluoride, polyvinyl alcohol, polyacrylic acid (PAA), carboxymethyl cellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrene-butadiene rubber, styrene-acrylic rubber, fluororubber, and various copolymers.

The current collector, as a base material supporting the electrode active material, is usually a metal foil with a thickness of 3 microns to 500 microns. There is no particular limitation on the material of the current collector, as long as the material has high electrical conductivity and does not produce chemical reactions in the system of the secondary battery. For example, the material may be a foil material obtained by surface-treating nickel, titanium, aluminum, nickel, silver, stainless steel, carbon, or the like. The current collector usually has a smooth surface, but fine lines can also be formed on its surface to improve the adhesion between the positive electrode active material and the current collector. In addition to foil, the current collector may also adopt any one or a combination of various forms such as film, mesh, porous, foam, or non-woven fabric.

The separator is arranged between the positive electrode sheet and the negative electrode sheet, and an insulating film with high ion permeability and high mechanical strength is usually used. The separator typically has a thickness of 9 $\mu$m to 18 $\mu$m, a pore size of 5 $\mu$m to 300 $\mu$m, an air permeability of 180s/100mL to 380s/100mL, and a porosity of 30% to 50%. As the separator, a sheet or non-woven fabric made of an olefin polymer such as polypropylene and glass fiber or polyethylene, which is chemically resistant and hydrophobic, is used.

The electrolyte used in the lithium-ion battery usually includes a non-aqueous solvent, lithium salt, and an additive.

Herein, the non-aqueous solvent may be a conventional non-aqueous solvent in the art, preferably an ester solvent, more preferably a carbonate solvent. To be specific, the carbonate solvent may be selected from at least one of ethylene carbonate, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), and butylene carbonate (BC).

The lithium salt may be selected from at least one of $LiPF_6$, $LiBF_4$, $LiN(SO_2F)_2$ (abbreviated as LiFSI), LiClO4, $LiAsF_6$, $LiB(C_2O_4)_2$ (abbreviated as LiBOB), $LiBF_2(C_2O_4)$ (abbreviated as LiDFOB), $LiN(SO_2R_F)_2$, and $LiN(SO_2F)(SO_2R_F)$. Preferably, the content of the lithium salt in the electrolyte is 5% to 20%.

The additive may be selected from at least one of vinylene carbonate (VC), fluoroethylene carbonate (FEC), vinylethylene carbonate (VEC), vinyl sulfate (DTD), vinylene sulfate, 1,3-propane sultone (PS), propene sultone, and 1,4-butane sultone. The typical amount of the additive used in the electrolyte is 1% to 4%, e.g., 2%, of the electrolyte.

In some embodiments, the negative electrode active material includes a silicon-carbon composite material, graphite, conductive carbon black, and a binder. Preferably, the negative electrode active material includes 1.6% to 45% of silicon-carbon composite material, 40% to 88.2% of graphite, 2% to 8% of conductive carbon black, and 2% to 18% of binder. More preferably, in terms of percentage by mass, the negative electrode active material includes 24% to 45% of silicon-carbon composite material, 40% to 63% of graphite, 2% to 8% of conductive carbon black, and 2% to 18% of binder

In some embodiments, a preparation method of the negative electrode sheet described in the above embodiments includes the following steps.

The silicon-carbon composite material and the graphite are stirred and mixed at a high speed at a mass ratio of (2 to 50):(98 to 50) to prepare a mixed negative electrode active material powder. The mixed negative electrode active material powder is then fully stirred and mixed with the conductive carbon black and the binder in an appropriate amount of deionized water at a mass ratio of (80 to 90):(2 to 8):(2 to 18), and a uniform negative electrode slurry is formed. The negative electrode slurry is coated on a surface of a negative electrode current collector copper foil, and after drying and cold pressing, the negative electrode sheet is obtained.

It should be noted that in the abovementioned embodiments of the disclosure, details of other process conditions and parameters in the preparation process of the negative electrode sheet are not described in detail. A person having ordinary skill in the art can prepare the negative electrode sheet according to the method described in the abovementioned embodiments in combination with general or conventional technical means and general knowledge in the art.

An embodiment of the disclosure provides an electronic apparatus including the electrochemical device described in the above embodiments.

The electronic device of this embodiment in the disclosure is any electronic device, such as but not limited to a notebook computer, a pen input computer, a mobile computers, an e-book player, a portable telephone, a portable fax machine, a portable copier, a portable printer, stereo headphones, a videocassette recorder, liquid-crystal display TV, a portable cleaner, a portable CD player, a mini-disc, a transceiver, an electronic notepad, a calculator, a memory card, a portable recorder, a radio, backup power, a motor, a car, motorcycle, power-assisted bicycle, bicycle, a lighting appliance, a toy, a game console, a clock, a power tool, a flash lamp, a camera, a large-scale domestic storage batteries, or a lithium-ion capacitor and the like. It should be noted that the electrochemical device provided by the disclosure is not only applicable to the electronic devices listed above, but also applicable to an energy storage power station, a sea carrier, and an air carrier. The air carrier includes an air carrier within the atmosphere and an air carrier outside the atmosphere.

It should be noted that in the above embodiments of the disclosure, the method and steps of assembling the lithium-ion battery are not described in detail. A person having ordinary skill in the art can assemble the positive electrode sheet, the negative electrode sheet, the electrolyte, and the separator to form a lithium-ion battery according to general or conventional technical means and general knowledge in the art.

The following specific examples are given to illustrate the disclosure in detail. It should also be understood that the following examples are only used to specifically illustrate the disclosure and should not be construed as limiting the protection scope of the disclosure. Some non-essential improvements and adjustments made by a person having ordinary skill in the art based on the above contents of the disclosure all belong to the protection scope of the disclosure. The specific process parameters and the like in the following examples are only examples of suitable ranges. That is, a person having ordinary skill in the art can make a selection within a suitable range through the description herein, and are not limited to the specific numerical values exemplified below.

Example 1

A silicon-carbon composite material was prepared in this example. The specific preparation process was provided as follows.

(a) Glucose (carbon source) and boric acid (boron source) were weighed according to the ratio of 98%: 2%, and 10% of sodium chloride of the total amount of carbon source and boron source was weighed as a pore-forming agent. The pore-forming agent, the carbon source, and the boron source were dissolved in a beaker, added with an appropriate amount of deionized water, and magnetically stirred for 1 h to dissolve completely, and a transparent, uniform, and stable solution was presented.
(b) The above solution was transferred to a blast drying oven, heated to 105°C and baked for 12 h to a completely dry state, and the recrystallized sample was ground and sieved.
(c) The thinned sample was transferred to a crucible and subjected to high-temperature heat treatment in a tube furnace. The basic parameters of the heat treatment were to raise the temperature to 650°C at a rate of 5°C·min$^{-1}$ under the protective atmosphere of argon, keep it for 2 hours, and then cool it naturally to room temperature under the protective atmosphere.
(d) The heat-treated sample was ground and sieved, placed in a beaker, added with an appropriate amount of deionized water, fully stirred until the recrystallized salt was dissolved, filtered with suction, and then washed several times with deionized water to remove sodium chloride in the solution. After washing, the sample was dried at 80°C for 24 hours in a blast drying oven, and a boron-doped porous carbon material was obtained after drying was completed.
(e) The sample obtained in the previous step was further subjected to silicon deposition, and the silicon source gas was passed into a reactor forming a vacuum environment, and chemical vapor deposition was performed for 3 hours, so that nano-silicon particles were deposited in the carbon-based material.
(f) The sample obtained in the previous step was further coated with carbon, and the carbon source gas was passed into the corresponding reactor for chemical vapor deposition of carbon. The deposition time was 2 hours, so that the composite material was evenly coated with a layer of carbon.

Example 2

In this example, a silicon-carbon composite material was prepared, and the preparation process was basically the same as in Example 1, except that the ratio of glucose (carbon source) to boric acid (boron source) was 99%: 1% in step (a).

Example 3

In this example, a silicon-carbon composite material was prepared, and the preparation process was basically the same as that in Example 1, except that the deposition time in step (e) was 6 hours.

Example 4

In this example, a silicon-carbon composite material was prepared, and the preparation process was basically the same as in Example 1, except that the ratio of glucose (carbon source) to boric acid (boron source) was 80%: 20% in step (a).

Example 5

In this example, a silicon-carbon composite material was prepared, and the preparation process was basically the same as in Example 4, except that the ratio of glucose (carbon source) to boric acid (boron source) was 80%: 40% in step (a).

Example 6

In this example, a silicon-carbon composite material was prepared, and the preparation process was basically the same as that in Example 1, except that the carbon source was sucrose, and the dopant source was hydrazine ($N_2H_4$) in step (a).

Comparative Example 1

In this comparative example, a silicon-carbon composite material was prepared, and the preparation process was basically the same as that in Example 1, except that no boron source was added in step (a), and only the carbon source and the pore-forming agent were kept.

Comparative Example 2

In this comparative example, a silicon-carbon composite material was prepared, and the preparation process was basically the same as that in Example 1, except that no boron source was added in step (a), only the carbon source and the pore-forming agent were kept, nickel nitrate or nickel-cobalt-iron-containing salt was added in the process as a catalyst, and the addition amount was 2%.

Example 7

In this example, a lithium-ion battery was prepared by using the silicon-carbon composite material in Examples 1 to 6 and the silicon-carbon composite material in Comparative Examples 1 to 2 according to the following method specifically as follows.

1. Preparation of Positive Electrode Sheet

A ternary material $LiNi_{0.8}Co_{0.1}Mn_{0.1}O_2$ was stirred and mixed at a high speed, and a mixed positive electrode active material powder material was prepared. Conductive carbon black (Super P), a conductive carbon tube (CNT), a nitrogen methyl pyrrolidone solvent (NMP), and polyvinylidene fluoride (PVDF) were dispersed and stirred at high speed for 2 hours at a mass ratio of 1: 0.5: 40: 1 to prepare a conductive slurry. The mixed active material powder material was stirred and mixed with the conductive slurry at a high speed to prepare a positive electrode slurry with a specific viscosity. The prepared slurry was uniformly coated on an aluminum foil with a scraper, placed in a blast drying oven, and dried at 120°C for 20 minutes. Finally, the dried electrode sheet was rolled and cut, and the positive electrode sheet was prepared.

2. Preparation of Negative Electrode Sheet

The prepared silicon-based material and graphite with a D50 of 10 $\mu$m were stirred and mixed at a high speed at a mass ratio of 40: 60 to prepare a mixed negative electrode active material powder material. The mixed negative electrode active material powder material was then fully stirred and mixed with Super P and PAA (polyacrylic acid) in an appropriate amount of deionized water at a mass ratio of 85: 5: 10 to form a uniform negative electrode slurry. The negative electrode slurry was coated on a surface of a negative electrode current collector copper foil, and after drying and cold pressing, the negative electrode sheet was obtained.

3. Preparation of Electrolyte

The organic solvent was a mixture of ethylene carbonate (EC), ethyl methyl carbonate (EMC), and diethyl carbonate (DEC), where the volume ratio of EC, EMC, and DEC was 20: 20: 60. In an argon atmosphere glove box with a water content smaller than 10ppm, fully-dried lithium salt ($LiPF_6$) was dissolved in the abovementioned organic solvent, and the electrolyte was obtained after mixing evenly, where the concentration of $LiPF_6$ was 1mol/L.

4. Preparation of Separator

A 12 $\mu$m thick polypropylene separator was selected.

5. Preparation of Battery

The above-prepared positive electrode sheet, the separator, and the negative electrode sheet were sequentially stacked in a way that the separator was placed between the positive and negative electrode sheets for isolation. It was then covered with aluminum-plastic film, transferred to a vacuum oven at 120°C to dry, and sealed after injecting 3.0 g/Ah of electrolyte. After standing still, hot and cold pressing, formation, fixture, grading, and other processes, a pouch battery (i.e., a lithium-ion battery) with a capacity of 1 Ah was finally prepared.

According to the following method, the silicon-carbon composite material in Examples 1 to 6 and the silicon-carbon composite material in Comparative Examples 1 to 2 were subjected to thermogravimetric testing specifically as follows.

A 5 mg sample was placed in a sample chamber, heated to 1400°C at a rate of 10°C/min in an air atmosphere, and a mass change curve with temperature was collected.

According to the following method, the lithium-ion battery assembled in Example 7 was tested for electrical properties specifically as follows.

The assembled lithium-ion battery was charged to 4.2V at 1C constant current, then charged to 0.05C at 4.2V at constant voltage, and left for 10 minutes, then discharged at 1C constant current to 2.8V, and left for 10 minutes. This was a cycle of charging and discharging, and the discharge capacity of this cycle was recorded. The charging and discharging process was repeated for 100 cycles, and the discharge capacity of each cycle was recorded.

$$\text{Cycle capacity retention (\%)} = 100^{\text{th}} \text{ cycle discharge capacity/1}^{\text{st}} \text{ cycle discharge capacity} \times 100\%;$$

Mass energy density of the battery (Wh/kg) = the first discharge energy/battery mass.

According to the following method, the lithium-ion battery assembled in Example 7 was tested for DCR specifically as follows:

The assembled lithium-ion battery was charged to 50% SOC, discharged at a rate of 4C for 30 seconds, and the initial discharge voltage was recorded as $V_1$. After discharging for 30 seconds, the voltage was $V_2$, the current was I, and the DCR was calculated according to the following formula:

$$DCR=((V_1-V_2)/I.$$

Inductively coupled plasma optical emission spectroscopy (ICP-OES) was used to conduct elemental analysis and test on the silicon-carbon composite materials in Examples 1 to 9 and Comparative Example 1 to obtain the contents of the nonmetal elements (B/N), silicon, and carbon. The accessible porosity (R) was calculated according to the formula, and the ID/IG was calculated through the analysis and test of the Raman spectrometer. The results are shown in Table 1.

Table 1: Test Results

|  | Nonmetal element (B/N) content Wt% | Silicon content Wt% | ID/IG | Accessible porosity (R)/ % | Cycle capacity retention for 800 cycles/% | DC resistance mohm |
|---|---|---|---|---|---|---|
| Example 1 | 0.32 | 30.3 | 0.79 | 26.4 | 85.2 | 98.5 |
| Example 2 | 0.13 | 28.8 | 0.77 | 24.8 | 87.2 | 97.2 |
| Example 3 | 0.28 | 46.3 | 0.73 | 44.3 | 82.3 | 100.5 |
| Example 4 | 3.21 | 36.8 | 1.22 | 30.1 | 82.2 | 99.3 |
| Example 5 | 4.94 | 64.8 | 1.98 | 59.8 | 80.2 | 92.3 |
| Example 6 | 0.28 | 43.3 | 0.75 | 41.3 | 82.3 | 100.5 |
| Comparative Example 1 | 0 | 20.2 | 0.66 | 16.3 | 84.2 | 103.2 |

(continued)

| | Nonmetal element (B/N) content Wt% | Silicon content Wt% | ID/IG | Accessible porosity (R)/ % | Cycle capacity retention for 800 cycles/% | DC resistance mohm |
|---|---|---|---|---|---|---|
| Comparative Example 2 | 0 | 35.3 | 0.64 | 28.3 | 75.4 | 106.5 |

Comparing Example 2, Example 4, and Example 1, it can be seen that by changing the ratio of glucose (carbon source) and boric acid (boron source), the doping amount of boron may be effectively increased, and the increase of boron doping amount may further improve the deposition efficiency of silicon. Under the same conditions, the silicon content of the material increases as the boron content in the material increases, and the ID/IG value of the material increases accordingly. This suggests that the degree of disorder of the carbon material increases, the conductivity increases, and the direct current resistance (DCR) of the battery decreases.

Comparing Example 3 and Example 1, it can be seen that the silicon content increases when the deposition time is prolonged.

Comparing Example 1 and Comparative Example 1, it can be seen that the deposition efficiency of the material without boron doping is much lower than that of the doped material, and the battery cycle performance and DC resistance (DCR) of the doped material are more favorable. This suggests that doping with the nonmetal element may catalyze the growth of silicon grains and improve the performance of the silicon-carbon composite material as well as the battery made from the material.

Comparing Example 1 and Comparative Example 2, it can be seen that the boron-doped catalytic deposition efficiency is close to that of metal catalysts, but the battery cycle stability is better. On the one hand, this is due to the impact of metal foreign matter on the performance of the battery, and on the other hand, the metal has strong catalytic activity and large silicon particles, resulting in damage to the expansion of the electrode material during the cycle.

Comparing Example 1 and Example 6, it can be seen that the silicon-carbon composite material of Example 6 has a higher silicon content. This suggests that the catalytic efficiency of nitrogen doping is higher than that of boron doping, indicating that the choice of the type of nonmetal element affects the increase of active sites on the carbon substrate. This affects the adsorption capacity of silicon during the vapor deposition process and the accessible ratio of the silicon source.

## Claims

1. A silicon-carbon composite material, comprising a carbon substrate, a silicon material attached to a surface of the carbon substrate and/or an inner portion of the carbon substrate, and a nonmetal element doped on the carbon substrate, wherein the nonmetal element and a carbon element form a covalent bond,

   the silicon-carbon composite material satisfies following relationships:

$$E_1=[910.4\ln(t_1)-1997.7]\pm10 \qquad (I),$$

   and

$$E_2=[503.1\ln(t_2)-1586]\pm10 \qquad (II),$$

   $E_1$ ranges from 180 eV to 700 eV, and $E_2$ ranges from 130 eV to 210 eV,
   wherein $E_1$ and $E_2$ are covalent bond energy formed by the nonmetal element and the carbon element in the silicon-carbon composite material, and ti and $t_2$ are relative atomic mass of the nonmetal element.

2. The silicon-carbon composite material according to claim 1, wherein the nonmetal element is selected from at least one of B, N, F, Cl, S, and P.

3. The silicon-carbon composite material according to claim 1, wherein at least one of following conditions (a) to (e) is satisfied:

EP 4 439 703 A1

(a) in the silicon-carbon composite material, a percentage by mass of the nonmetal element ranges from 0.001 wt% to 5 wt%,
(b) in the silicon-carbon composite material, a percentage by mass of a silicon element ranges from 10 wt% to 65 wt%,
(c) in the silicon-carbon composite material, a percentage by mass of the carbon element ranges from 35 wt% to 90 wt%,
(c) an ID/IG ratio of the silicon-carbon composite material ranges from 0.4 to 2,
(e) the silicon-carbon composite material satisfies following relationship:

$$R=[m \times P/2.21]/[1- m \times n/2.25] \times 100\%,$$

R ranges from 20% to 70%,
wherein R is an accessible porosity and m is a true density with a unit of $g/cm^3$ in the silicon-carbon composite material, n and P respectively are percentages by mass of the carbon element and the silicon element in the silicon-carbon composite material with a unit of wt%.

4. The silicon-carbon composite material according to claim 1, wherein the silicon-carbon composite material comprises an inner core and a carbon coating layer covering the inner core, the inner core comprises the carbon substrate, the silicon material attached to the surface of the carbon substrate and/or the inner portion of the carbon substrate, and the nonmetal element doped on the carbon substrate, and the nonmetal element and the carbon element form the covalent bond.

5. A preparation method of a silicon-carbon composite material, comprising:

a high-temperature heat treatment step: uniformly mixing a carbon source, an inorganic nonmetal source, and a pore-forming agent and then obtaining a nonmetal-doped carbon-based material through a high-temperature heat treatment; and
a chemical vapor deposition step: reacting, through a chemical vapor deposition, a silicon source with the nonmetal-doped carbon-based material and then obtaining the silicon-carbon composite material,
the silicon-carbon composite material comprises a carbon substrate, a silicon material attached to a surface of the carbon substrate and/or an inner portion of the carbon substrate, and a nonmetal element doped on the carbon substrate, wherein the nonmetal element and a carbon element form a covalent bond,
the silicon-carbon composite material satisfies following relationships:

$$E_1=[910.4\ln(t_1)-1997.7]\pm10 \qquad (I),$$

and

$$E_2=[503.1\ln(t_2)-1586]\pm10 \qquad (II),$$

$E_1$ ranges from 180 eV to 700 eV, and $E_2$ ranges from 130 eV to 210 eV,
wherein $E_1$ and $E_2$ are covalent bond energy formed by the nonmetal element and the carbon element in the silicon-carbon composite material, and ti and $t_2$ are relative atomic mass of the nonmetal element.

6. The preparation method of the silicon-carbon composite material according to claim 5, further comprising following step: carbon-coating the silicon-carbon composite material.

7. The preparation method of the silicon-carbon composite material according to claim 5, wherein a time of the chemical vapor deposition is 1 hour to 12 hours.

8. The preparation method of the silicon-carbon composite material according to claim 5, wherein a mass ratio of the carbon source and the inorganic nonmetal source is (80 to 99):(1 to 40).

9. An electrochemical device, comprising a negative electrode sheet, wherein the negative electrode sheet comprises a negative electrode current collector and a negative electrode active material layer disposed on the negative

13

electrode current collector, the negative electrode active material layer comprises a negative electrode active material, and the negative electrode active material comprises the silicon-carbon composite material according to any one of claims 1 to 4.

**10.** An electronic apparatus, comprising the electrochemical device according to claim 9.

**11.** An electrochemical device, comprising a negative electrode sheet, wherein the negative electrode sheet comprises a negative electrode current collector and a negative electrode active material layer disposed on the negative electrode current collector, the negative electrode active material layer comprises a negative electrode active material, and the negative electrode active material comprises the silicon-carbon composite material obtained through the method according to any one of claims 5 to 8.

**12.** An electronic apparatus, comprising the electrochemical device according to claim 11.

Europäisches
Patentamt

European
Patent Office

Office européen
des brevets

# EUROPEAN SEARCH REPORT

Application Number

EP 23 20 8996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 108 172 775 A (HEFEI GUOXUAN HIGH TECH POWER ENERGY CO LTD) 15 June 2018 (2018-06-15) * claim 1; example 1 * ----- | 1-12 | INV. H01M4/134 H01M4/133 H01M4/1393 H01M4/1395 H01M4/36 |
| A | CN 113 363 430 A (LIYANG TIANMU PILOT BATTERY MATERIAL TECH CO LTD) 7 September 2021 (2021-09-07) * claim 1; examples 2,3 * ----- | 1-12 | H01M4/38 H01M4/587 |
| A | CN 113 066 970 A (NINGDE AMPEREX TECHNOLOGY LTD) 2 July 2021 (2021-07-02) * claim 1 * ----- | 1-12 | |
| A | CN 115 642 233 A (BEIJING WELION NEW ENERGY TECH CO LTD) 24 January 2023 (2023-01-24) * claim 6 * ----- | 1-12 | |

TECHNICAL FIELDS
SEARCHED      (IPC)

H01M

The present search report has been drawn up for all claims

| Place of search | Date of completion of the search | Examiner |
|---|---|---|
| Munich | 18 May 2024 | González Junquera, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 20 8996

This annex lists the patent family members relating to the patent documents cited in  the above-mentioned European search report.
The members are as contained in the European Patent Office EDP file on
The European Patent Office is in no way liable for these particulars which are merely given for the purpose of information.

18-05-2024

| Patent document cited in search report | | Publication date | Patent family member(s) | | Publication date |
|---|---|---|---|---|---|
| CN 108172775 | A | 15-06-2018 | NONE | | |
| CN 113363430 | A | 07-09-2021 | NONE | | |
| CN 113066970 | A | 02-07-2021 | NONE | | |
| CN 115642233 | A | 24-01-2023 | CN | 115642233 A | 24-01-2023 |
| | | | EP | 4345942 A1 | 03-04-2024 |

EPO FORM P0459

For more details about this annex : see Official Journal of the European Patent Office, No. 12/82